# EUROPÄISCHE PATENTSCHRIFT

(11) **EP 3 440 368 B1**
(45) Veröffentlichungstag und Bekanntmachung des Hinweises auf die Patenterteilung: **14.10.2020**
(21) Anmeldenummer: 17709069.3
(22) Anmeldetag: 07.03.2017
(51) Int. Cl.: F16C 41/00, F16C 29/00, F16C 29/06

(54) **FÜHRUNGSWAGEN MIT VERFORMUNGSSENSOR AM LAUFBAHNELEMENT**
GUIDE CARRIAGE HAVING DEFORMATION SENSOR ON TRACK ELEMENT
CHARIOT DE GUIDAGE À CAPTEUR DE DÉFORMATION SUR L'ÉLÉMENT DE CHEMIN DE ROULEMENT

(30) Priorität: 05.04.2016 DE 102016205575
(43) Veröffentlichungstag der Anmeldung: 13.02.2019
(73) Patentinhaber: Robert Bosch GmbH, 70442 Stuttgart (DE)
(72) Erfinder: ZIEGLER, Mario, 97241 Bergtheim (DE)
(86) Internationale Anmeldenummer: PCT/EP2017/055253
(87) Internationale Veröffentlichungsnummer: WO 2017/174275

(56) Entgegenhaltungen:
- EP-A1- 1 502 700
- EP-B1- 1 443 229
- EP-B1- 1 719 992
- DE-A1- 3 725 520
- DE-A1- 10 307 882

## Beschreibung

Die Erfindung betrifft einen Führungswagen gemäß dem Oberbegriff von Anspruch 1 und ein Verfahren zu dessen Betrieb.

Aus der EP 1 719 992 B1 ist ein Linearwälzlager mit einem Führungswagen bekannt, der mit einem Verformungssensor in Form eines Dehnungsmessstreifens versehen ist. Der Dehnungsmessstreifen misst punktuell die Materialdehnung des Führungswagens-Hauptkörpers.

Aus der DE 20 2014 004 377 U1 und der DE 10 2008 019 002 A1 sind Führungswägen mit gesonderten Laufbahnelementen für die Wagenlaufbahnen bekannt. Aus der EP 1 443 229 B1, die die Merkmale des Oberbegriffs von Anspruch 1 offenbart, ist ein Laufbahnelement mit einem freitragenden Abschnitt bekannt.

Ein Vorteil der vorliegenden Erfindung besteht darin, dass anhand der Messsignale die Gesamtlast auf den Führungswagen bestimmbar ist. Weiter ist die Restlebensdauer des Führungswagens bzw. des Linearwälzlagers ermittelbar.

Gemäß Anspruch 1 wird vorgeschlagen, dass wenigstens ein Verformungssensor vorgesehen ist, welcher im Bereich eines jeweils zugeordneten freitragenden Abschnitts am Führungswagen angeordnet ist, wobei mit dem wenigstens einen Verformungssensor eine Verformung des zugeordneten freitragenden Abschnitts des Laufbahnelements messbar ist, wobei der wenigstens eine Verformungssensor an eine Auswertevorrichtung angeschlossen ist.

Die Führungsschiene erstreckt sich vorzugsweise parallel zur Längsachse. Die Führungsschiene hat vorzugsweise für jede Reihe von Wälzkörpern eine Schienenlaufbahn, an welcher die zugeordneten Wälzkörper lastübertragend abwälzen. Das Laufbahnelement ist vorzugsweise gesonderte vom Hauptkörper ausgebildet. Es ist über auch denkbar, dass das Laufbahnelement und der Hauptkörper einstückig ausgebildet wird. Im letzten Fall wird der freitragende Abschnitt vorzugsweise dadurch gebildet, dass das Laufbahnelement über den Hauptkörper übersteht. Der Hauptkörper besteht vorzugweise aus Metall und höchst vorzugweise aus Stahl. Mit dem Hauptkörper können weitere Teile verbunden sein, welche vorzugsweise aus Kunststoff bestehen. Bei der genannten Verformung des freitragenden Abschnitts handelt es sich vorzugsweise um eine Biegeverformung. Das Laufbahnelement besteht vorzugsweise aus Stahl, wobei es höchst vorzugsweise gehärtet ist.

In den abhängigen Ansprüchen sind vorteilhafte Weiterbildungen und Verbesserungen der Erfindung angegeben.

Es kann vorgesehen sein, dass zumindest ein Verformungssensor einen Dehnungsmessstreifen und/oder eine piezoelektrische Folie umfasst, welcher bzw. welche im Bereich des freitragenden Abschnitts auf der von der Wagenlaufbahn abgewandten Seite fest mit dem Laufbahnelement verbunden ist. Ein derartiger Verformungssensor ist besonders Platz sparend.

Es kann vorgesehen sein, dass zumindest ein Verformungssensor einen Abstandssensor umfasst, mit welchem ein Abstand zwischen dem freitragenden Abschnitt des Laufbahnelements und dem Hauptkörper messbar ist. Mit einem Abstandssensor kann die Verformung des freitragenden Abschnitts besonders genau gemessen werden. Der Abstandssensor kann kapazitiv, induktiv, optisch oder mechanisch arbeiten.

Es kann vorgesehen sein, dass der Abstandssensor wahlweise am Hauptkörper oder am Laufbahnelement befestigt ist.

Es kann vorgesehen sein, dass das Laufbahnelement zumindest zwei freitragende Abschnitte aufweist, welche in Richtung der Längsachse an gegenüberliegenden Enden des

Laufbahnelements angeordnet sind, wobei zumindest einer Wagenlaufbahn dieses Laufbahnelements zwei Verformungssensoren zugeordnet sind, welche in Richtung der Längsachse an gegenüberliegenden Enden des Laufbahnelements angeordnet sind. Damit kann die Gesamtlast auf den Führungswagen auch dann noch ermittelt werden, wenn diese außermittig am Führungswagen angreift oder wenn diese in Form eines Drehmoments am Führungswagen angreift. In beiden Fällen wirken auf die tragenden Wälzkörper im Führungswagen unterschiedliche Einzellasten. Diese können anhand der Messsignale der Verformungssensoren bestimmt werden, was weiter unten näher erläutert wird. Der Führungswagen hat vorzugsweise mehrere Reihen, höchst vorzugsweise vier Reihen von Wälzkörpern, wobei jeder Wagenlaufbahn zwei Verformungssensoren zugeordnet sind, welche in Richtung der Längsachse an gegenüberliegenden Enden des betreffenden Laufbahnelements angeordnet sind.

Es kann vorgesehen sein, dass der Führungswagen mit einem Wegsensor versehen ist, mit welchem durch Abtasten einer Maßverkörperung an der Führungsschiene eine Relativstellung zwischen dem Führungswagen und der Führungsschiene ermittelbar ist, wobei der Wegsensor an die Auswertevorrichtung angeschlossen ist. Hierdurch kann der vom Führungswagen zurückgelegte Weg ermittelt werden, welcher für die Ermittlung der Restlebensdauer des Linearwälzlagers benötigt wird.

Vorgeschlagen wird außerdem ein Verfahren zum Betrieb eines erfindungsgemäßen Führungswagens, wobei mittels der beiden Verformungssensoren die Verformung der beiden freitragenden Abschnitte gemessen wird, welche einer Wagenlaufbahn zugeordnet sind, wobei aus den genannten Verformungen jeweils eine erste Einzellast auf die jeweils für die betreffende Verformung maßgeblichen Wälzkörper ermittelt wird, wobei aus den ersten Einzellasten mehrere zweite Einzellasten auf die zwischen den maßgeblichen Wälzkörpern angeordneten Wälzkörpern ermittelt werden, wobei aus den ersten und den zweiten Einzellasten eine erste Gesamtlast ermittelt wird. Die maßgeblich Wälzkörper sind vorzugsweise diejenigen Wälzkörper, deren Mittelpunkte im freitragenden Abschnitt angeordnet sind. Dabei kann es sein, dass nur ein einziger Wälzkörper für die Verformung maßgeblich ist, nämlich derjenige dessen Mittelpunkt den geringsten Abstand zum Anlageabschnitt aufweist, an dem das betreffende Laufbahnelement am Hauptkörper abgestützt ist. Vorzugsweise ist das Laufbahnelement jedoch so ausgelegt, dass im Bereich des freitragenden Abschnitts mehrere Wälzkörper tragen, wobei der vorstehend genannte Wälzkörper am höchsten belastet ist. Die Belastung der tragenden Wälzkörper eines freitragenden Abschnitts kann rechnerisch zu einer einzigen ersten Einzellast zusammengefasst werden. Die erste Gesamtlast ist vorzugsweise die Summe aus allen ersten und zweiten Einzellasten. Bei der ersten Gesamtlast kann es sich aber auch um das Drehmoment handeln, welches die betreffenden Wälzkörper übertragen.

Es kann vorgesehen sein, dass der Führungswagen mehrere, vorzugsweise vier, Reihen von Wälzkörpern aufweist, wobei die genannte erste Gesamtlast für jede Reihe von Wälzkörpern ermittelt wird, wobei aus den ersten Gesamtlasten eine zweite Gesamtlast berechnet wird, indem die ersten Gesamtlasten unter Berücksichtigung eines Druckwinkels der zugeordneten Reihe von Wälzkörpern vektoriell addiert werden. Die zweite Gesamtlast ist dementsprechend gleich der äußeren Last, welche auf den Führungswagen einwirkt. Mit der vorliegenden Erfindungen können alle sechs Komponenten der zweiten Gesamtlast ermittelt werden, nämlich zwei Kraftkomponenten und drei Drehmomentkomponenten. In Bewegungsrichtung des Führungswagen wird dabei von den Wälzkörper näherungsweise keine Kraft übertragen.

Es kann vorgesehen sein, dass der vom Führungswagen zurückgelegte Weg gemessen wird, wobei aus dem zurückgelegten Weg und den ersten Gesamtlasten und/oder der zweiten Gesamtlast die Restlebensdauer des Führungswagens ermittelt wird. Zur Ermittlung der Restlebensdauer wird auf die Formeln in den einschlägigen Linearwälzlager-Katalogen verwiesen. Der zurückgelegte Weg wird vorzugsweise mittels des oben angesprochenen Wegsensors ermittelt. Es ist aber auch denkbar, dass der Führungswagen mit einem Motor in Antriebsverbindung steht, welcher mit einem Drehgeber ausgestattet ist, wobei der zurückgelegte Weg mittels des Drehgebers ermittelt wird. Weiter ist es denkbar, dass der Führungswagen mit einem Beschleunigungssensor versehen ist, wobei durch zweifache Integration der gemessenen Beschleunigung der zurückgelegt Weg ermittelt wird.

Schutz wird außerdem für einen Führungswagen beansprucht, dessen Auswertevorrichtung zur Durchführung eines der vorstehenden Verfahren eingerichtet ist.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird im Folgenden anhand der beigefügten Zeichnungen näher erläutert. Es zeigt:
- Fig. 1: eine grobschematische Seitenansicht eines Linearwälzlagers mit einem Führungswagen gemäß einer ersten Ausführungsform der Erfindung;
- Fig. 2: einen grobschematischen Längsschnitt des Linearwälzlagers nach Fig. 1;
- Fig. 3: eine grobschematische Teilschnittansicht des Verformungssensors des Linearwälzlagers nach Fig. 1;
- Fig. 4: eine der Fig. 3 entsprechende Ansicht eines Verformungssensors gemäß einer zweiten Ausführungsform der Erfindung;
- Fig. 5: eine der Fig. 3 entsprechende Ansicht eines Verformungssensors gemäß einer dritten Ausführungsform der Erfindung;
- Fig. 6: einen Querschnitt des Linearwälzlagers nach Fig. 1; und
- Fig. 7: einen der Fig. 6 entsprechenden Querschnitt eines Linearwälzlagers mit einem Führungswagen gemäß einer vierten Ausführungsform der Erfindung.

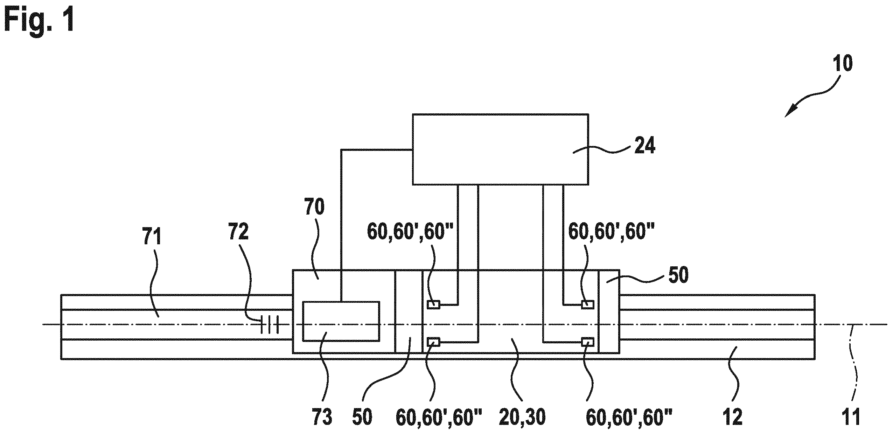

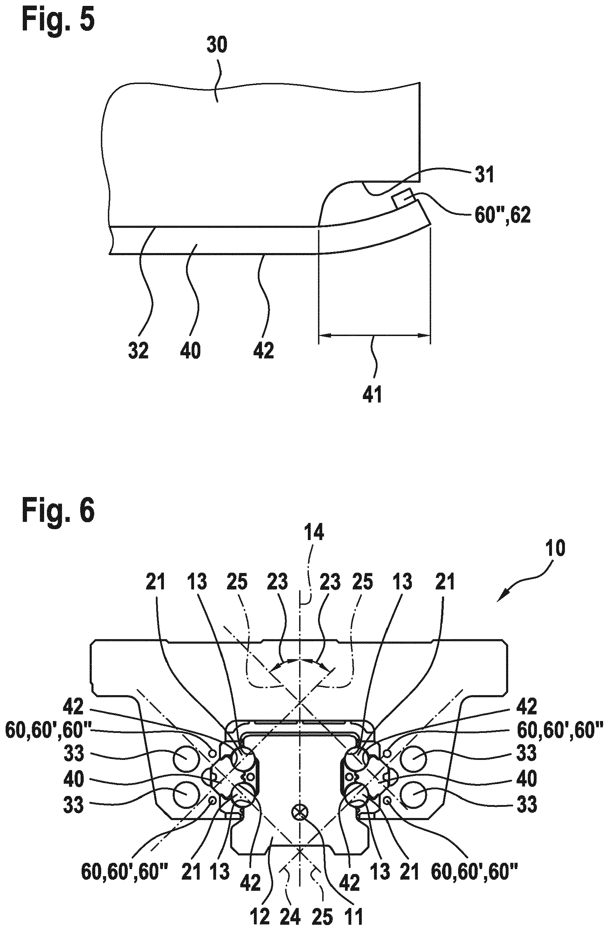

Fig. 1 zeigt eine grobschematische Seitenansicht eines Linearwälzlagers 10 mit einem Führungswagen 20 gemäß einer ersten Ausführungsform der Erfindung. Das Linearwälzlager 10 umfasst eine Führungsschiene 12, an der ein Führungswagen 20 in Richtung der Längsachse 11 beweglich gelagert ist. Die Führungsschiene 12 erstreckt sich mit einer konstanten Querschnittsform (siehe Fig. 6) in Richtung der Längsachse 11. An einer Seitenfläche der Führungsschiene 12 kann eine Maßverkörperung 71 angebracht sein, welche sich über die gesamte Länge der Führungsschiene 12 erstreckt. Die Maßverkörperung 71 kann beispielsweise entsprechend der EP 1 052 480 B1 ausgeführt sein. Sie wird dementsprechend von einem Band aus Stahlblech gebildet, welches mit Markierungen 72 in Form von untereinander gleichen, rechteckigen Durchbrüchen versehen ist. Entgegen der Darstellung in Fig. 1 sind die Markierungen 72 über die gesamte Länge der Maßverkörperung verteilt angeordnet, wobei sie einen konstanten Teilungsabstand aufweisen.

Der Führungswagen 20 umfasst einen Hauptkörper 30, welcher vorzugsweise aus ungehärtetem Stahl besteht. An den beiden in Richtung der Längsachse 11 gegenüberliegenden Enden des Hauptkörpers 30 ist jeweils eine gesonderte Endkappe 50 befestigt, welche vorzugsweise aus Kunststoff besteht. An einer der Endkappen 50 kann eine Wegmessvorrichtung 70 befestigt sein, welche einen Wegsensor 73 umfasst, der beispielsweise gemäß der EP 1 164 358 B1 aufgebaut ist. Der Wegsensor 73 kann wenigstens eine Sendespule und wenigstens eine Empfangsspule aufweisen, welche so angeordnet sind, dass die induktive Kopplung zwischen der Empfangsspule und der Sendespule von der Stellung des Wegsensors 73 relativ zur Maßverkörperung 71 abhängt. Der Wegsensor 73 ist an eine Auswertevorrichtung 24 angeschlossen, welche vorzugsweise zumindest einen Analog-Digital-Wandler und wenigstens einen digitalen Datenverarbeitungsbaustein, beispielsweise einen Mikroprozessor oder ein FPGA, aufweist. Die Auswertevorrichtung 24 kann innerhalb der Wegemessvorrichtung 70 angeordnet sein.

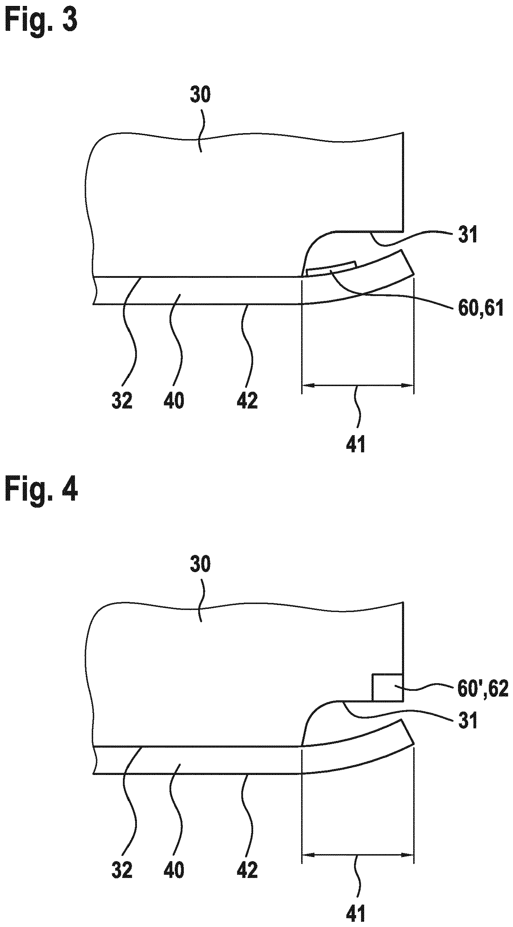

Weiter ist in Fig. 1 die Anordnung der erfindungsgemäßen Verformungssensoren 60; 60'; 60" grobschematisch eingezeichnet, welche mit Bezug auf die Fig. 3 bis 5 genauer beschrieben sind. Auf jeder der beiden gegenüberliegenden Seiten der Führungsschiene 12 befinden sich beispielsweise zwei Wagenlaufbahnen (Nr. 42 in Fig. 6), denen jeweils zwei Verformungssensoren 60; 60'; 60" zugeordnet sind, welche an in Richtung der Längsachse 11 gegenüberliegenden Enden der betreffenden Wagenlaufbahn bzw. des entsprechenden Laufbahnelements (Nr. 40 in Fig. 6) angeordnet sind. Alle Verformungssensoren 60; 60'; 60" sind an die Auswertevorrichtung 24 angeschlossen.

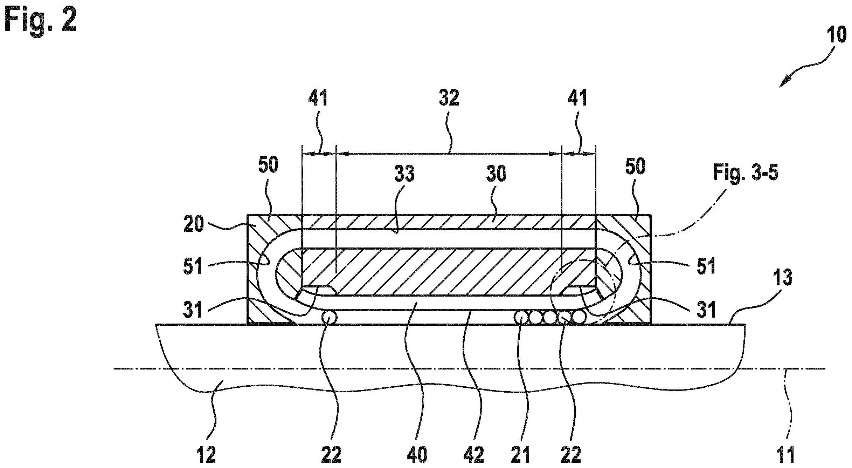

Fig. 2 zeigt einen grobschematischen Längsschnitt des Linearwälzlagers 10 nach Fig. 1. Die Schnittebene wurde so gelegt, dass sie durch die Mittelpunkte der Wälzkörper 21 einer Reihe von endlos umlaufenden Wälzkörpern 21 verläuft. Die Wälzkörper 21 laufen in einem endlosen Umlaufkanal um, welcher aus einem Tragbereich, einem Rücklaufkanal 33 und zwei Umlenkkanälen 51 zusammengesetzt ist. Entgegen der Darstellung in Fig. 2 ist nahezu der gesamte Umlaufkanal mit Wälzkörpern 21 aufgefüllt. Der Tragbereich wird von einer Schienenlaufbahn 13 an der Führungsschiene 12 und einer Wagenlaufbahn 42 am Laufbahnelement 40 des Führungswagens 20 begrenzt. Zwischen diesen Laufbahnen 13; 42 wälzen die Wälzkörper 21 lastübertragend ab, wobei sie vorzugsweise unter Vorspannung dort eingebaut sind. Die Wagenlaufbahn 42, die Schienenlaufbahn 13 und der Rücklaufkanal 33 verlaufen gerade und parallel zur Längsachse 11. Die beiden gebogenen Umlenkkanäle 51 verbinden den Tragbereich mit dem Rücklaufkanal 33, so dass die Wälzkörper 21 endlos umlaufen können.

Das Laufbahnelement 40 besteht vorzugsweise aus gehärtetem Stahl, wobei es an einem Anlageabschnitt 32 am Hauptkörper 30 lastübertragen anliegt. Es kann dabei unmittelbar am Hauptkörper 30 anliegen, wobei es von der Vorspannkraft der Wälzkörper 21 gegen den Anlageabschnitt 32 gedrückt wird und dort reibschlüssig gehalten wird. Es ist aber auch denkbar, dass das Laufbahnelement 40 stoffschlüssig mit dem Hauptkörper 30 verbunden, beispielsweise verklebt ist. An den beiden in Richtung der Längsachse 11 gegenüberliegenden Enden des Laufbahnelements 40 ist jeweils eine Aussparung 31 am Hauptkörper 30 vorgesehen, so dass das Laufbahnelement 40 dort einen freitragenden Abschnitt 41 aufweist, welcher nicht am Hauptkörper 30 anliegt. Alternativ oder zusätzlich kann am Laufbahnelement 40 eine vergleichbare (nicht dargestellte) Aussparung vorgesehen sein. Weiter ist es denkbar, dass die Laufbahneinlage 40 in Richtung der Längsachse 11 über den Hauptkörper 30 übersteht, um den freitragenden Abschnitt zu bilden.

Im Bereich des freitragenden Abschnitts, der Gegenstand der EP 1 443 229 B1 ist, wird die Laufbahneinlage 40 durch die Kraft der Wälzkörper 21 verbogen. Dabei hat sich gezeigt, dass diese Verbiegung in erster Linie durch den in Fig. 2 mit der Bezugsziffer 22 gekennzeichneten maßgeblichen Wälzkörper verursacht wird. Dies ist derjenige Wälzkörper 22, dessen Mittelpunkt im freitragenden Abschnitt 41 angeordnet ist, wobei der genannte Mittelpunkt gleichzeitig den geringsten Abstand zum Anlageabschnitt 32 aufweist. Die übrigen Wälzkörper im freitragenden Abschnitt 41 können ebenfalls zur Verformung beitragen, wenn auch weniger stark. Der vorliegenden Erfindung liegt die Erkenntnis zugrunde, dass die Größe der Verformung des freitragenden Abschnitts 41 ein Maß für die erste Einzellast auf den oder die maßgeblichen Wälzkörper 22 ist. Untersuchungen der Anmelderin haben darüber hinaus gezeigt, dass die freitragenden Abschnitte 41 zur Folge haben, dass die tragenden Wälzkörper 21 eine außerordentliche gleichförmige Lastverteilung aufweisen, so dass aus den ersten Einzellasten, welche auf den oder die maßgeblichen Wälzkörper 22 wirken, die zweiten Einzellasten, welche auf die übrigen tragenden Wälzkörper 21 wirken, ermittelt werden können. Die übrigen tragenden Wälzkörper 21 befinden sich zwischen den maßgeblichen Wälzkörpern 22. Im Rahmen einer Näherung beträgt die zweite Einzellast zwischen 70% und 130% der auf den Ort des jeweils betrachteten Wälzkörpers 21 linear interpolierte Wert aus den ersten Einzellasten. Die untere Grenze ist vor allem in Fällen maßgeblich, in denen im freitragenden Abschnitt 41 mehrere Wälzkörper nennenswert tragen, deren Belastung rechnerisch zu einer einzigen ersten Einzellast zusammengefasst wird. Die obere Grenze ist vor allem in Fällen maßgeblich, in denen jeweils nur ein einziger maßgeblicher Wälzköper trägt. Mittels FEM-Berechnungen können genauere Ergebnisse erzielt werden. Die Anzahl der tragenden Wälzkörper zwischen den maßgeblichen Wälzkörpern 22 ist gleich der Länge des Anlageabschnitts 32 dividiert durch den Durchmesser der Wälzkörper 21. Es versteht sich, dass diese Anzahl eine ganze Zahl ist, welche bei einer Bewegung des Führungswagens um Eins variieren kann. Im Rahmen der Lastberechnung wird der Einfachheit halber mit dem ungerundeten oder mit dem abgerundeten Wert gerechnet.

Fig. 3 zeigt eine grobschematische Teilschnittansicht des Verformungssensors 60 des Linearwälzlagers nach Fig. 1. Die Lage der Teilschnittansicht ist in Fig. 2 mit einer Strichpunktlinie gekennzeichnet, wobei die Schnittebenen der Fig. 2 und 3 gleich gewählt sind. In Fig. 3 sind ausschließlich der Hauptkörper 30, das Laufbahnelement 40 und der Verformungssensor 60 dargestellt. Der Verformungssensor 60 ist in Form eines Dehnungsmessstreifens 61 ausgebildet, welcher im Bereich des freitragenden Abschnitts 41 auf der von der Wagenlaufbahn 42 abgewandten Seite auf das Laufbahnelement 40 aufgeklebt ist. Der Dehnungsmessstreifen 61 ist vorzugsweise an der Stelle angeordnet, an welcher die größten biegebedingten Materialstauchungen auftreten, also möglichst nahe am Anlageabschnitt 32.

Anstelle des Dehnungsstreifens 61 kann auch eine piezoelektrische Folie eingesetzt werden. Im Rahmen der vorliegenden Erfindungen können mit einer piezoelektrischen Folie auch statische Belastungen des Führungswagens gemessen werden, so lange sich dieser bewegt. Die sich bewegenden Wälzkörper bewirken dann eine sich zeitlich verändernde Dehnung bzw. Stauchung der piezoelektrischen Folie, so dass diese eine geeignete Messspannung liefert.

Fig. 4 zeigt eine der Fig. 3 entsprechende Ansicht eines Verformungssensors 60' gemäß einer zweiten Ausführungsform der Erfindung. Bei dem Verformungssensor 60' handelt es sich um einen Abstandssensor 62, welcher im Bereich des freitragenden Abschnitts 41 am Hauptkörper 30 befestigt ist, wobei er gegenüberliegend zum Laufbahnelement 40 angeordnet ist. Mit dem Abstandssensor 62 ist ein Abstand zwischen dem freitragenden Abschnitt 41 des Laufbahnelements 40 und dem Hauptkörper 30 messbar. Der Abstandssensor 62 kann beispielsweise kapazitiv, induktiv, optisch oder mechanisch arbeiten. Er ist vorzugsweise an der Stelle angeordnet, an welcher das Laufbahnelement 40 biegebedingt den größten Weg zurücklegt, also am äußersten freien Ende des Laufbahnelements 40.

Fig. 5 zeigt eine der Fig. 3 entsprechende Ansicht eines Verformungssensors 60" gemäß einer dritten Ausführungsform der Erfindung. Im Unterschied zur Fig. 4 ist der Verformungssensor 60" in Form eines Abstandssensors 62 nunmehr am Laufbahnelement 41 befestigt und zwar auf der Seite, welche dem Hauptkörper 30 zugewandt ist. Im Übrigen gilt das zu Fig. 4 Gesagte.

Fig. 6 zeigt einen Querschnitt des Linearwälzlagers 10 nach Fig. 1. Der Führungswagen 20 hat insgesamt vier Reihen von kugelförmigen Wälzkörpern 21. Die entsprechenden Drucklinien 25 haben zusammengenommen die Form des Buchstabens O, weshalb man von einer O-Anordnung spricht. Die vorliegende Erfindung ist aber auch für ein Linearwälzlager 10 verwendbar, bei welchem die Wälzkörper eine X-Anordnung aufweisen. An jedem Laufbahnelement 40 sind insgesamt zwei Wagenlaufbahnen 42 vorgesehen, wobei das Laufbahnelement reibschlüssig am Hauptkörper 30 anliegt. Der Führungswagen 20 ist im Querschnitt betrachtet U-förmig ausgebildet, wobei er die Führungsschiene 12 umgreift. Die vorliegende Erfindung ist aber auch für U-förmige Führungsschienen verwendbar, welche den Führungswagen umgreifen.

In Fig. 6 ist die Lage der Verformungssensoren 60; 60'; 60" in Bezug auf das Laufbahnelement 40 jeweils mit einem Kreis gekennzeichnet. Es versteht sich, dass die Verformungssensoren 60; 60'; 60" nicht in der Schnittebene der Fig. 6 angeordnet sind, sondern in Richtung der Längsachse 11 an der in den Fig. 3 bis 5 dargestellten Stelle. Quer zur Längsachse 11 sind die Verformungssensoren 60; 60'; 60" in Richtung der jeweiligen Drucklinie 25 auf der von der zugeordneten Wagenlaufbahn 42 abgewandten Seite des Laufbahnelements 40 angeordnet. Dementsprechend sind jedem Laufbahnelement 40 vier Verformungssensoren 60; 60'; 60" zugeordnet, nämlich je zwei an beiden Längsenden.

Der Winkel zwischen den Drucklinien 25 und der Symmetrieebene 14 des Linearwälzlagers 10 wird als Druckwinkel 23 bezeichnet. Er wird im Rahmen der Berechnung der zweiten Gesamtlast benötigt.

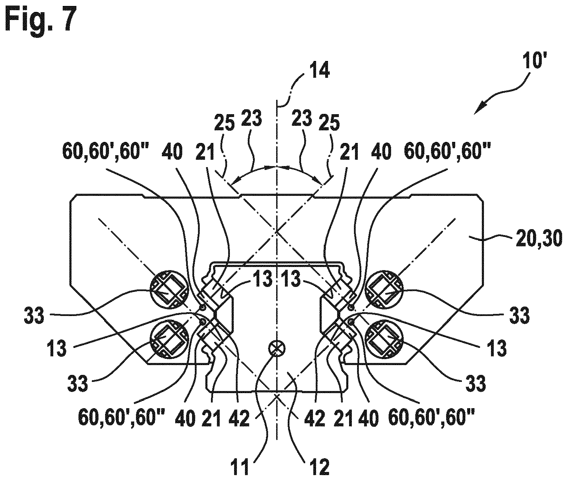

Fig. 7 zeigt einen der Fig. 6 entsprechenden Querschnitt eines Linearwälzlagers 10' mit einem Führungswagen 20 gemäß einer vierten Ausführungsform der Erfindung. Im Unterschied zu Fig. 6 hat das Linearwälzlager 10' rollenförmige Wälzkörper 21, wobei jeder Wagenlaufbahn 42 ein gesondertes Laufbahnelement 40 zugeordnet ist, welches mit dem Hauptkörper 30 verklebt ist. Die Lage der Verformungssensoren 60; 60'; 60" ist analog zu Fig. 6 jeweils mit einem Kreis gekennzeichnet.

### Bezugszeichen

- 10: Linearwälzlager (erste Ausführungsform)
- 10': Linearwälzlager (vierte Ausführungsform)
- 11: Längsachse
- 12: Führungsschiene
- 13: Schienenlaufbahn
- 14: Symmetrieebene

- 20: Führungswagen
- 21: Wälzkörper
- 22: maßgeblicher Wälzkörper
- 23: Druckwinkel
- 24: Auswertevorrichtung
- 25: Drucklinie

- 30: Hauptkörper
- 31: Aussparung
- 32: Anlageabschnitt
- 33: Rücklaufkanal

- 40: Laufbahnelement
- 41: freitragender Abschnitt
- 42: Wagenlaufbahn

- 50: Endkappe
- 51: Umlenkkanal

- 60: Verformungssensor (erste Ausführungsform)
- 60': Verformungssensor (zweite Ausführungsform)
- 60": Verformungssensor (dritte Ausführungsform)
- 61: Dehnungsmessstreifen
- 62: Abstandssensor

- 70: Wegmessvorrichtung
- 71: Maßverkörperung
- 72: Markierung
- 73: Wegsensor

## Patentansprüche

1. Führungswagen (20) zur Verwendung mit einer langgestreckten Führungsschiene (12), wobei der Führungswagen (20) wenigstens eine Reihe von endlos umlaufenden Wälzkörpern (21) umfasst, welche an einer zugeordneten Wagenlaufbahn (42) lastübertragend abwälzen, wobei sich die Wagenlaufbahn (42) parallel zu einer Längsachse (11) erstreckt, wobei die Wagenlaufbahn (42) an einem Laufbahnelement (40) angerordnet ist, welches mit einem Hauptkörper (30) des Führungswagens (20) verbunden ist, wobei das Laufbahnelement (40) zumindest einen freitragenden Abschnitt (41) aufweist, welcher in Richtung der Längsachse (11) an einem Ende des Laufbahnelements (40) angeordnet ist, wobei der freitragende Abschnitt (41) nicht an dem Hauptkörper (30) abgestützt ist,
**dadurch gekennzeichnet, dass** wenigstens ein Verformungssensor (60; 60'; 60") vorgesehen ist, welcher im Bereich eines jeweils zugeordneten freitragenden Abschnitts (41) am Führungswagen (20) angeordnet ist, wobei mit dem wenigstens einen Verformungssensor (60; 60'; 60") eine Verformung des zugeordneten freitragenden Abschnitts (41) des Laufbahnelements (40) messbar ist, wobei der wenigstens eine Verformungssensor an eine Auswertevorrichtung (24) angeschlossen ist.

2. Führungswagen nach Anspruch 1,
wobei zumindest ein Verformungssensor (60') einen Dehnungsmesstreifen (61) und/oder eine piezoelektrische Folie umfasst, welcher bzw. welche im Bereich des freitragenden Abschnitts (41) auf der von der Wagenlaufbahn (42) abgewandten Seite fest mit dem Laufbahnelement (40) verbunden ist.

3. Führungswagen nach Anspruch 1,
wobei zumindest ein Verformungssensor (60'; 60") einen Abstandssensor (62) umfasst, mit welchem ein Abstand zwischen dem freitragenden Abschnitt (41) des Laufbahnelements (40) und dem Hauptkörper (30) messbar ist.

4. Führungswagen nach Anspruch 3,
wobei der Abstandssensor (62) wahlweise am Hauptkörper (30) oder am Laufbahnelement (40) befestigt ist.

5. Führungswagen nach einem der vorstehenden Ansprüche,
wobei der Führungswagen (20) mit einem Wegsensor (73) versehen ist, mit welchem durch Abtasten einer Maßverkörperung (71) an der Führungsschiene (12), eine Relativstellung zwischen dem Führungswagen (20) und der Führungsschiene (12) ermittelbar ist, wobei der Wegsensor (73) an die Auswertevorrichtung (24) angeschlossen ist.

6. Führungswagen nach einem der vorstehenden Ansprüche,
wobei das Laufbahnelement (40) zumindest zwei freitragende Abschnitte (41) aufweist, welche in Richtung der Längsachse (11) an gegenüberliegenden Enden des Laufbahnelements (40) angeordnet sind, wobei zumindest einer Wagenlaufbahn (42) dieses Laufbahnelements (40) zwei Verformungssensoren (60; 60'; 60") zugeordnet sind, welche in Richtung der Längsachse (11) an gegenüberliegenden Enden des Laufbahnelements (40) angeordnet sind.

7. Verfahren zum Betrieb eines Führungswagens nach Anspruch 6,
wobei mittels der beiden Verformungssensoren (60; 60'; 60") die Verformung der beiden freitragenden Abschnitte (41) gemessen wird, welche einer Wagenlaufbahn (42) zugeordnet sind, wobei aus den genannten Verformungen jeweils eine erste Einzellast auf die jeweils für die betreffende Verformung maßgeblichen Wälzkörper (22) ermittelt wird, wobei aus den ersten Einzellasten mehrere zweite Einzellasten auf die zwischen den maßgeblichen Wälzkörpern (22) angeordneten Wälzkörpern (21) ermittelt werden, wobei aus den ersten und den zweiten Einzellasten eine erste Gesamtlast ermittelt wird.

8. Verfahren nach Anspruch 7,
wobei der Führungswagen (20) mehrere, vorzugsweise vier, Reihen von Wälzkörpern (21) aufweist, wobei die genannte erste Gesamtlast für jede Reihe von Wälzkörpern (21) ermittelt wird, wobei aus den ersten Gesamtlasten eine zweite Gesamtlast berechnet wird, indem die ersten Gesamtlasten unter Berücksichtigung eines Druckwinkels (23) der zugeordneten Reihe von Wälzkörpern (21) vektoriell addiert werden.

9. Verfahren nach Anspruch 7 oder 8,
wobei der vom Führungswagen (20) zurückgelegte Weg gemessen wird, wobei aus dem zurückgelegten Weg und den ersten Gesamtlasten und/oder der zweiten Gesamtlast die Restlebensdauer des Führungswagens (20) ermittelt wird.

10. Führungswagen (20) nach einem der Ansprüche 5 oder 6, wobei die Auswertevorrichtung (24) zur Durchführung eines Verfahrens nach einem der Ansprüche 7 bis 9 eingerichtet ist.

## Claims

1. Guide carriage (20) for use with an elongate guide rail (12), wherein the guide carriage (20) comprises at least one row of endlessly circulating rolling bodies (21), which roll in a load-transmitting manner on an associated carriage track (42), wherein the carriage track (42) extends parallel to a longitudinal axis (11), wherein the carriage track (42) is arranged on a track element (40), which is connected to a main body (30) of the guide carriage (20), wherein the track element (40) has at least one self-supporting portion (41), which is arranged at one end of the track element (40), as seen in the direction of the longitudinal axis (11), wherein the self-supporting portion (41) is not supported on the main body (30),
**characterized in that** at least one deformation sensor (60; 60'; 60") is provided, and is arranged on the guide carriage (20) in the region of a respectively associated self-supporting portion (41), wherein the at least one deformation sensor (60; 60'; 60") can measure a deformation of the associated self-supporting portion (41) of the track element (40), wherein the at least one deformation sensor is connected to an evaluation device (24).

2. Guide carriage according to Claim 1,
wherein at least one deformation sensor (60') comprises a strain gauge (61) and/or a piezoelectric film, said gauge or film being fixed to the track element (40) in the region of the self-supporting portion (41), on the side directed away from the carriage track (42).

3. Guide carriage according to Claim 1,
wherein at least one deformation sensor (60'; 60'') comprises a proximity sensor (62), which can measure a spacing between the self-supporting portion (41) of the track element (40) and the main body (30).

4. Guide carriage according to Claim 3,
wherein the proximity sensor (62) is fastened optionally on the main body (30) or on the track element (40).

5. Guide carriage according to one of the preceding claims,
wherein the guide carriage (20) is provided with a distance sensor (73), which, by sensing a measuring scale (71) on the guide rail (12), can determine a relative positioning between the guide carriage (20) and the guide rail (12), wherein the distance sensor (73) is connected to the evaluation device (24).

6. Guide carriage according to one of the preceding claims,
wherein the track element (40) has at least two self-supporting portions (41), which are arranged at opposite ends of the track element (40), as seen in the direction of the longitudinal axis (11), wherein at least one carriage track (42) of said track element (40) is assigned two deformation sensors (60; 60'; 60"), which are arranged at opposite ends of the track element (40), as seen in the direction of the longitudinal axis (11).

7. Method of operating a guide carriage according to Claim 6,
wherein the two deformation sensors (60; 60'; 60") measure the deformation of the two self-supporting portions (41), which are assigned to a carriage track (42), wherein the aforementioned deformations are used to determine a respective first individual load acting on the rolling bodies (22) which are critical in each case for the relevant deformation,
wherein the first individual loads are used to determine a number of second individual loads acting on the rolling bodies (21) arranged between the critical rolling bodies (22), wherein the first and the second individual loads are used to determine a first total load.

8. Method according to Claim 7,
wherein the guide carriage (20) has a plurality of, preferably four, rows of rolling bodies (21), wherein the aforementioned first total load is determined for each row of rolling bodies (21),
wherein the first total loads are used to calculate a second total load, the first total loads being added vectorially, with account being taken of a pressure angle (23) of the associated row of rolling bodies (21).

9. Method according to Claim 7 or 8,
wherein the distance covered by the guide carriage (20) is measured, wherein the distance covered and the first total loads and/or the second total load are used to determine the remaining service life of the guide carriage (20).

10. Guide carriage (20) according to either of Claims 5 and 6, wherein the evaluation device (24) is designed to implement a method according to one of Claims 7 to 9.

## Revendications

1. Chariot de guidage (20) destiné à être utilisé avec un rail de guidage allongé (12), le chariot de guidage (20) comprenant au moins une rangée d'éléments de roulement (21) tournant sans fin qui roulent en transmission de charge sur un chemin de roulement de chariot (42) associé, le chemin de roulement de chariot (42) s'étendant parallèlement à un axe longitudinal (11), le chemin de roulement de chariot (42) étant disposé sur un élément de chemin de roulement (40) qui est relié à un corps principal (30) du chariot de guidage (20), l'élément de chemin de roulement (40) comportant au moins une portion saillante (41) qui est disposée à une extrémité de l'élément de chemin de roulement (40) dans la direction de l'axe longitudinal (11), la portion saillante (41) n'étant pas en appui sur le corps principal (30),
**caractérisé en ce qu'**au moins un capteur de déformation (60 ; 60' ; 60") est prévu qui est disposé au niveau d'une portion saillante (41) à chaque fois associée au niveau du chariot de guidage (20), l'au moins un capteur de déformation (60 ; 60' ; 60") pouvant mesurer une déformation de la portion saillante (41) associée de l'élément de chemin de roulement (40), l'au moins un capteur de déformation étant raccordé à un dispositif d'évaluation (24).

2. Chariot de guidage selon la revendication 1,
au moins un capteur de déformation (60') comprenant une jauge de contrainte (61) et/ou un film piézoélectrique qui sont reliés de manière fixe à l'élément de chemin de roulement (40) du côté opposé au chemin de roulement de chariot (42) au niveau de la portion saillante (41).

3. Chariot de guidage selon la revendication 1,
au moins un capteur de déformation (60' ; 60'') comprenant un capteur de distance (62) permettant de mesurer une distance entre la portion saillante (41) de l'élément de chemin de roulement (40) et le corps principal (30).

4. Chariot de guidage selon la revendication 3,
le capteur de distance (62) étant fixé au choix au corps principal (30) ou à l'élément de chemin de roulement (40).

5. Chariot de guidage selon l'une des revendications précédentes,
le chariot de guidage (20) étant pourvu d'un capteur de déplacement (73) permettant de déterminer une position relative entre le chariot de guidage (20) et le rail de guidage (12) par balayage d'une échelle de mesure (71) sur le rail de guidage (12), le capteur de déplacement (73) étant raccordé au dispositif d'évaluation (24).

6. Chariot de guidage selon l'une des revendications précédentes,
l'élément de chemin de roulement (40) comportant au moins deux portions saillantes (41) qui sont disposées à des extrémités opposées de l'élément de chemin de roulement (40) dans la direction de l'axe longitudinal (11), deux capteurs de déformation (60 ; 60' ; 60"), qui sont disposés à des extrémités opposées de l'élément de chemin de roulement (40) dans la direction de l'axe longitudinal (11), étant associés à au moins un chemin de roulement de chariot (42) de cet élément de chemin de roulement (40).

7. Procédé de fonctionnement d'un chariot de guidage selon la revendication 6,
la déformation des deux portions saillantes (41), qui sont associées à un chemin de roulement (42), étant mesurée au moyen des deux capteurs de déformation (60 ; 60' ; 60"), une première charge individuelle exercée sur les éléments roulants (22) concernés par la déformation en question étant déterminée à chaque fois à partir desdites déformations, une pluralité de deuxièmes charges individuelles exercées sur les éléments roulants (21), disposés entre les éléments roulants concernés (22), étant déterminées à partir des premières charges individuelles, une première charge totale étant déterminée à partir des première et deuxièmes charges individuelles.

8. Procédé selon la revendication 7,
le chariot de guidage (20) comportant plusieurs, de préférence quatre, rangées d'éléments roulants (21), ladite première charge totale étant déterminée pour chaque rangée d'éléments roulants (21), une deuxième charge totale étant calculée à partir des premières charges totales par addition vectorielle des premières charges totales avec prise en compte d'un angle de pression (23) de la rangée associée d'éléments roulants (21) .

9. Procédé selon la revendication 7 ou 8,
le chemin parcouru par le chariot de guidage (20) étant mesuré, la durée de vie restante du chariot de guidage (20) étant déterminée à partir du chemin parcouru et des premières charges totales et/ou de la deuxième charge totale.

10. Chariot de guidage (20) selon l'une des revendications 5 et 6,
le dispositif d'évaluation (24) étant conçu pour mettre en œuvre un procédé selon l'une des revendications 7 à 9.
